# FASCICULE DE BREVET EUROPEEN

(11) **EP 1 551 219 B1**
(45) Date de publication et mention de la délivrance du brevet: **15.03.2006**
(21) Numéro de dépôt: 03795988.9
(22) Date de dépôt: 14.10.2003
(51) Int. Cl.: A01K 11/00

(54) **BOUTON ELECTRONIQUE DE MARQUAGE ET D IDENTIFICATION DU BETAI L.**
ELEKTRONISCHES KNOPFMARKIERUNGSZEICHEN ZUM MARKIEREN UND IDENTIFIZIEREN VON VIEH
ELECTRONIC BUTTON TAG FOR TAGGING AND IDENTIFYING CATTLE

(30) Priorité: 14.10.2002 FR 0212739
(43) Date de publication de la demande: 13.07.2005
(73) Titulaire: Allflex Europe SAS (Société par Actions Simplifiée), 35502 Vitre Cedex (FR)
(72) Inventeur: COSTANTINI, Anne, F-35130 LA GUERCHE DE BRETAGNE (FR)
(74) Mandataire: Ravina, Bernard
(86) Numéro de dépôt international: PCT/EP2003/050716
(87) Numéro de publication internationale: WO 2004/034779

(56) Documents cités:
- EP-A- 0 941 656
- DE-A- 3 730 894
- DE-U- 29 812 383
- US-A1- 2002 095 828

## Description

La présente invention concerne un bouton électronique de marquage et d'identification du bétail et autres animaux du type destiné à être fixé sur une des oreilles de l'animal, ledit bouton contenant des moyens électroniques de traçabilité.

De manière connue, les dispositifs à cet effet destinés à assurer la traçabilité électronique des animaux, notamment des animaux de rente depuis la naissance jusqu'à l'abattage et/ou au consommateur final sont constitués d'une boucle comprenant une étiquette avec un poinçon mâle qui traverse l'oreille et s'y bloque dans une étiquette avec une tête femelle.

Les étiquettes sont dotées de marquages conventionnels et indélébiles.

A cette boucle connue est associé un bouton électronique de forme quelconque, par exemple circulaire doté d'un perçage axial de passage du poinçon mâle. Voir p.e. le document DE-U-29812383.

Ce bouton selon l'invention constitue la tête femelle qui reçoit le poinçon mâle.

Ce bouton électronique renferme un transpondeur programmable ou non avec bobine et microprocesseur.

De manière connue, le transpondeur peut être surmoulé ou enfermé entre deux demi coques qui sont assemblées par collage ou par un soudage à ultrasons.

Une des difficultés rencontrées par le bouton connu et les procédés de fabrication mis en oeuvre réside dans la nécessité de ne pas altérer le transpondeur lors du montage ou de pouvoir, en cas de besoin, l'extraire du bouton, sans abîmer, ni altérer les données du microprocesseur.

Ce dernier cas est particulièrement important s'il faut effectuer une expertise de ces données, par exemple, pour détecter un disfonctionnement.

Les boutons connus ne répondent pas à cet impératif.

Lorsque le transpondeur est surmoulé par enrobage sous pression, dans une matière synthétique en fusion, des contraintes mécaniques sont engendrées, notamment lors du refroidissement, d'où peuvent découler la modification de la forme de la bobine et de sa fréquence d'utilisation avec diminution globale des performances du transpondeur.

Lorsque les coques enserrant le transpondeur sont assemblées par collage, ces coques sont réalisées dans une ou des matières synthétiques rigides.

Le collage ne donne pas satisfaction sur la durée car les colles l'altèrent sous l'effet de l'exposition aux rayons ultraviolets ou par simple vieillissement.

Cela peut générer une pénétration de l'humidité et une corrosion du transpondeur.

Il est important que le bouton électronique ne s'altère pas à l'usage, le marquage obtenu par celui-ci devant durer pendant toute la vie de l'animal pour en assurer la traçabilité.

En outre, la résistance mécanique de l'assemblage des demi coques peut être altéré, ce qui peut conduire à leur séparation sous l'effet d'une action mécanique, par exemple frottements sur la végétation.

Le soudage par ultrasons ne donne pas plus satisfaction, en raison de l'épaisseur importante requise pour les demi coques à souder, ce qui ne permet pas d'avoir des coques de petite taille adaptables aux ovins et aux porcins, par exemple.

La présente invention vise à obvier aux inconvénients ci-dessus, en permettant de réaliser des boutons de taille réduite, moins susceptible d'accrochage dans la végétation ou les clôtures dans lesquels le transpondeur ne soit pas agressé au montage ou en cours d'utilisation.

A cet effet, le bouton électronique de marquage et d'identification du bétail et autres animaux, selon l'invention comportant une coque, avec passage axial transversal d'un moyen de fixation à l'oreille de l'animal, ladite coque enfermant un transpondeur se caractérise essentiellement en ce que la coque est réalisée en deux demi coques dont une, dite inférieure, et une dite supérieure, assemblées entre elles par un plan médian transversal à l'orifice de passage du moyen de fixation,

Le transpondeur est calé sans compression entre les deux demi coques par une colle. Par colle, on désigne plus génériquement toute substance apte à assurer un calage du transpondeur tel qu'un gel ou une substance de calage qui doivent être non agressifs et/ou neutres par rapport aux matériaux du transpondeur.

Les deux demi coques sont assemblées par une soudure au laser.

Le bouton électronique, selon l'invention se caractérise en ce que les deux demi coques sont dotées de parois externes et internes et/ou d'un ou de plusieurs bossages internes qui peuvent être complémentaires contribuant à la fois à leur assemblage, à la rigidification de la coque et au calage du transpondeur inteme.

Le bouton électronique se caractérise en ce que la demi coque supérieure comprend autour de l'axe médian, sur une paroi plane, un canon avec orifice central dont une paroi cylindrique est en saillie vers l'extérieur sur une paroi cylindrique intérieure, sous ladite paroi plane pour raccordement avec une paroi cylindrique correspondante de la demi coque inférieure, la paroi plane, de la demi coque supérieure étant à sa périphérie raccordée à une paroi cylindrique orthogonale de raccordement à la demi coque inférieure, ladite paroi cylindrique étant orthogonale à la paroi plane de la demi coque inférieure.

Suivant une autre disposition, le bouton électronique se caractérise en ce la demi coque inférieure comprend autour de son axe médian, une paroi cylindrique intérieure correspondant à celle de la demi coque supérieure et définissant le passage du moyen de fixation du bouton à l'oreille de l'animal, et en ce qu'elle est dotée d'un rebord périphérique en saillie coopérant avec la paroi périphérique orthogonale de la demi coque supérieure.

Le bouton électronique se caractérise en ce que le ou les bossages internes est ou sont disposés entre la paroi cylindrique interne et le rebord périphérique.

De préférence, un bossage interne circulaire est ménagé sur la face interne de la paroi circulaire plane entre la paroi cylindrique interne et le rebord périphérique.

Suivant encore une autre disposition, le bouton électronique se caractérise en ce que le bossage interne est de hauteur inférieure à la hauteur libre dans le bouton pour le calage du microprocesseur.

D'autres avantages et caractéristiques de l'invention apparaîtront à la lecture de la description ci-après d'une forme de réalisation donnée à titre d'exemple non limitatif, illustrée par les dessins joints dans lesquels :
- la figure 1 est une vue en coupe d'un bouton selon l'invention représentant l'assemblage des deux demi coques et le transpondeur,
- la figure 2 est une vue en coupe de la demi coque inférieure,
- la figure 3 est une vue en coupe de la demi coque supérieure à la ligne telle que représentée en figure 1,
- la figure 4 est une vue en coupe d'une autre forme de réalisation du bouton selon l'invention,
- la figure 5 est une vue d'une portion agrandie de la figure 4,
- les figures 6 et 7 sont des vues de demi coquilles inférieure et supérieure selon la réalisation de la figure 4.

Le bouton électronique selon l'invention est constitué d'une coque en matière synthétique par assemblage de deux demi coques 1 et 2 entre lesquelles est disposé un transpondeur de type connu comprenant une bobine 3' et un microprocesseur programmable 3".

La, coque constituée par assemblage des deux demi coques 1-2 est de forme préférentiellement circulaire.

La coque est dotée d'un passage 4, axial suivant son centre et transversal d'un moyen de fixation à l'oreille de l'animal, le dit moyen étant la tige du poinçon mâle de la boucle de marquage.

Le dit passage axial pouvant être débouchant dans le cas où le bouton constitue une tête femelle ouverte de réception de la pointe conique de l'étiquette mâle ou le dit passage pouvant être borgne, obturé à une de ses extrémités dans le cas où le bouton constitue une tête fermée.

Le bouton est doté d'un sens de pose, la face plane de la demi coquille 1 venant contre l'oreille de l'animal.

Les demi coques 1-2 sont assemblées entre elles par un plan médian transversal à l'orifice 4.

La demi coquille 1 est dite inférieure.

La demi coquille 2 est dite supérieure.

Le transpondeur 3, 3', 3" est calé comme décrit plus avant entre les coques 1-2 dont le soudage s'effectue par laser.

La demi coque inférieure 1 et la demi coque supérieure 2 sont dotées de parois externes et internes et de un ou de plusieurs bossages internes complémentaires ou non contribuant à la fois à leur assemblage, à la rigidification de la coque, au calage du transpondeur et à la réalisation de la solidarisation des demi coques par soudage.

La demi coque supérieure 2 comprend autour de l'axe médian, un canon cylindrique traversant, dont la paroi cylindrique 5 est en saillie vers l'extérieur sur une paroi plane circulaire 6.

La paroi 5 est prolongée côté intérieur sous la paroi 6 par une paroi cylindrique 7.

La paroi cylindrique 7 présente du côté du passage 4 un épaulement 8 faisant fonction de butée lors de la jonction avec la demie coque inférieure ce qui fige le volume intérieur nécessaire à la sauvegarde du transpondeur.

La paroi plane 6 est à sa périphérie raccordée à une paroi verticale 9 orthogonale à la précédente et cylindrique de raccordement à la demi coquille inférieure.

Les extrémités de parois 7/9 sont sur un même plan.

Les extrémités des parois 7/9 présentent sur leur section des tores de fusion 10, c'est-à-dire un cordon de matériau synthétique, fondus au soudage qui sont dimensionnées pour que le surplus de matière fondue au soudage soit réduit au minimum sans affecter la qualité de l'opération de soudage.

L'extrémité de la paroi 9 présente un épaulement 11 externe auquel correspondra un épaulement complémentaire de la demi coque inférieure.

La demi coquille inférieure 1 comprend, autour de son axe médian, une paroi cylindrique interne 12 qui est complémentaire de la paroi 7 de la demi coque supérieure et qui est dotée d'un épaulement d'emboîtage avec l'épaulement 8 de celle-ci.

Les épaulements sont calculés pour assurer un jeu fonctionnel interne au bouton, par rapport au transpondeur, de l'ordre de 0,1 millimètre.

La demi coquille inférieure est dotée d'un rebord périphérique 13 en saillie à l'extrémité de la paroi plane 14.

Le rebord périphérique 13 se loge au montage dans l'épaulement 11 de la paroi 9 délimitant la demi coque supérieure 2.

Avantageusement, l'extrémité du rebord périphérique 13 présente un chanfrein du côté intérieur.

Le rebord a une fonction anti débordement qui garanti que la bavure des cordons 10 de matière lors du soudage se réalise à l'intérieur et non à l'extérieur, ce qui poserait des problèmes d'irritation de l'oreille de l'animal.

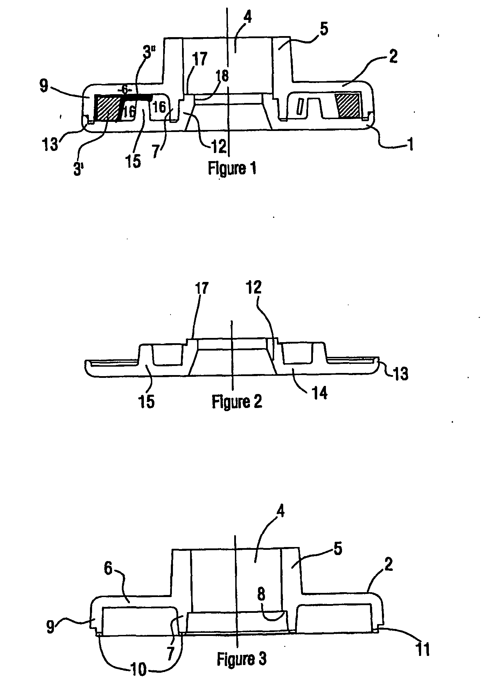

Comme représenté aux figures et notamment en figure 1, la hauteur des parois 7, 9 et du rebord 13 définissent le volume rétabli avec un jeu fonctionnel de plus ou moins x 0,1 millimètre pour le maintien en place, sans détérioration lors du montage, du transpondeur.

Entre le rebord 13 et la paroi cylindrique 12, sur sa face interne est réalisé un bossage 15 annulaire de hauteur Inférieure à la hauteur libre à l'intérieur du bouton, c'est-à-dire de hauteur inférieure à celle des parois 7 et 9 de la demi coquille 2.

Le bossage permet d'appliquer le microprocesseur 3 dans la colle 16 le calant, la colle venant de part et d'autre du bossage 15.

La colle est utilisée pour caler le transpondeur dans sa totalité, bobine et microprocesseur et le protège contre les agressions mécaniques telles que les chocs et également contre les agressions thermiques.

La colle utilisée est chimiquement inerte.

Elle présente un coefficient de dilatation compatible avec ceux du cuivre et des soudures du transpondeur.

La paroi cylindrique interne 12 de la demi-coquille inférieure présente une forme conique, en forme de cône tronqué plus large à sa base vers l'extérieur, qu'à son sommet, vers l'intérieur.

La base du perçage constituée par la paroi cylindrique 12 à un diamètre sensiblement égal à celui du canon 4 et son sommet présente une portion terminale cylindrique 18 de diamètre inférieur à sa base et au canon 4 qui définit un épaulement supérieur sensiblement plan 17.

Cette configuration permet le blocage en position de la pointe conique du poinçon mâle, qui lorsqu'elle est passée au delà de l'épaulement 17 ne peut plus venir en arrière.

Le bouton fait, dans le binôme étiquette mâle/tête femelle évoqué en introduction, fonction de tête femelle. Cette tête femelle, constituée par le bouton, pouvant être ouverte comme représentée, le canon 4 débouchant, ou fermée, le canon 4 étant obturé à son extrémité sur la demi-coque supérieure pour interdire l'accès à la pointe conique du poinçon de l'étiquette mâle.

L'opération de soudage est effectuée au moyen d'un système laser à diode de longueur d'onde adapté par exemple 904 à 940 nanomètres.

L'intérêt d'un soudage laser est que son action peut être parfaitement dirigée sur les tores de fusion 10 ce qui évite toute détérioration des demi coques et du transpondeur.

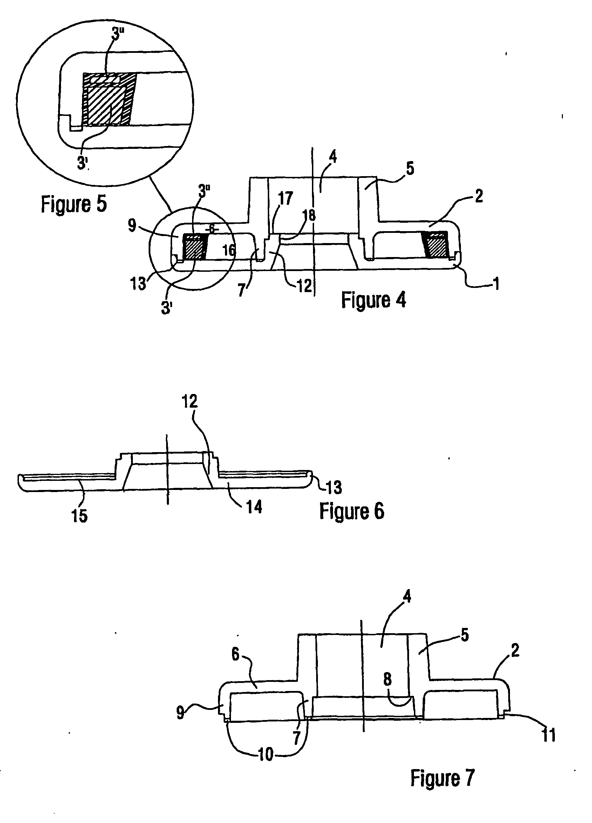

La figure 4 représente une autre forme de réalisation au niveau du transpondeur 3. Celui-ci est doté d'un processeur 3" qui est rabattu et collé sur le bobinage 3', l'ensemble étant calé par l'élément 16 qui peut être une colle ou un gel ou tout autre matériau adapté.

L'épaisseur du transpondeur 3 réalisée selon cette configuration est telle qu'il remplisse le volume interne des deux demi coquilles 1-2 assemblées, la colle 16 calant l'ensemble.

Dans cette forme de réalisation, il n'est pas utile de réaliser le bossage 15 représenté aux figures 2 et 3.

## Revendications

1. Bouton électronique de marquage et d'identification du bétail comportant, enfermé dans une coque, un transpondeur programmable ou non, la dite coque comportant un passage (4) débouchant ou borgne axial transversal d'un moyen de fixation à l'oreille de l'animal, **caractérisé en ce que** :
- la coque est réalisée en deux demi coques dont une inférieure (1) et une supérieure (2) assemblée entre elles par un plan médian transversal à l'orifice de passage axial (4) du moyen de fixation,
- que le transpondeur (3) est calé sans compression entre les deux demi coques par une colle (16),
- que les deux demi coques sont assemblées par une soudure au laser.

2. Bouton électronique selon la revendication 1 **caractérisé en ce que** les deux demi coques (1-2) sont dotées de parois externes et internes complémentaires contribuant à la fois à leur assemblage, à la rigidification de la coque et au calage du transpondeur inteme.

3. Bouton électronique selon la revendication 1 ou la revendication 2 **caractérisé en ce que** la demi coque supérieure (2) comprend autour de l'axe médian un canon avec orifice central dont une paroi cylindrique (5) est une saillie vers l'extérieur sur une paroi plane (6) et se prolonge par une paroi cylindrique intérieure (7) sous la dite paroi plane pour raccordement avec une paroi cylindrique correspondante (12) de la demi coque inférieure (1), la paroi plane de la demi coque supérieure étant à sa périphérie raccordée à une paroi cylindrique verticale (9) de raccordement à la demi coque inférieure (1).

4. Bouton électronique selon, la revendication 3 **caractérisé en ce que** la demi coque inférieure (1) comprend autour de son axe médian une paroi cylindrique interne (12) correspondant à celle (5) du canon de la demi coque supérieure et définissant le passage du moyen de fixation du bouton à l'oreille de l'animal,
- qu'elle est dotée d'un bossage interne (15),
- qu'elle est dotée d'un rebord périphérique (13) en saillie coopérant avec la paroi périphérique orthogonale (9) de la demi coque supérieure.

5. Bouton électronique selon la revendication 4 **caractérisé en ce que** un bossage interne (15) est disposé entre la paroi cylindrique interne (12) et le rebord périphérique (13).

6. Bouton électronique qui, selon la revendication 4 ou la revendication 5 **caractérisé en ce que** le bossage interne (15) est de hauteur inférieure à la hauteur libre à l'intérieur du bouton.

7. Bouton électronique selon l'une quelconque des revendications 3 à 6 **caractérisé en ce que** la paroi cylindrique (12) de le demi-coquille inférieure présente une forme conique avec un épaulement supérieur (17) de blocage de la pointe du pointeau d'une étiquette mâle.

8. Bouton électronique selon l'une quelconque des revendications 3 à 7 **caractérisé en ce que** le canon est obturé sur la demi-coque supérieure.

9. Bouton électronique selon l'une quelconque des revendications 3 à 8 **caractérisé en ce que** les extrémités des parois (7/9) verticales de la demi coque supérieure (2) présentent des tores de fusion (10).

10. Bouton électronique selon la revendication 1 **caractérisé en ce que** le transpondeur (3) présente le processeur (3") rabattu sur le bobinage (3'), l'ensemble étant calé par la colle (16).

11. Bouton électronique selon la revendication 9 **caractérisé en ce que** les tores de fusion sont soumises à l'action d'un laser pour réaliser le soudage.

12. Bouton électronique selon l'une quelconque des revendications 3 à 11 **caractérisé en ce que** la demi coquille inférieure (1) est dotée d'un rebord périphérique (13) qui se loge au montage dans l'épaulement externe (11) de la paroi verticale (9) de la demi-coquille supérieure (2).

## Claims

1. An electronic button tag for tagging and identifying cattle comprising a transponder, programmable or not, enclosed in a shell, said shell comprising an openended or blind axial transverse passage (4) for a fixing means to the ear of the animal,
**characterised in that**:
- the shell is made from two half-shells namely a lower half-shell (1) and an upper half shell (2), which are assembled together at a median plane which is disposed transversely to the axial passage opening (4) for the fixing means,
- the transponder (3) is fixed in place without compression between the two half-shells using a glue (16),
- the two half-shells are assembled by means of a laser weld.

2. An electronic button tag according to claim 1 **characterised in that** the two half shells (1-2) are provided with complementary internal and extemal walls, contributing to their assembly, to stiffening the shell and to fixing the internal transponder in place.

3. An electronic button tag according to claim 1 or claim 2 **characterised in that** the upper half-shell (2) comprises a sleeve with a central opening around the median axis, wherein a cylindrical wall (5) projects outwards on a planar wall (6) and is extended by an inner cylindrical wall (7) below said planar wall to connect with a corresponding cylindrical wall (12) on the lower half-shell (1), the planar wall of the upper half-shell being connected on its periphery to a vertical cylindrical wall (9) connecting it to the lower half-shell (1).

4. An electronic button tag according to claim 3 **characterised in that** the lower half-shell (1) comprises a cylindrical inner wall (12) around its median axis corresponding to that (5) of the sleeve of the upper half-shell and providing the passage for the fixing means of the button tag to the animal's ear,
- that it is provided with an internal projection (15),
- that it is provided with a projecting peripheral rim (13) cooperating with the orthogonal peripheral wall (9) of the upper half-shell.

5. An electronic button tag according to claim 4, **characterised in that** an internal projection (15) is placed between the internal cylindrical wall (12) and the peripheral rim (13).

6. An electronic button tag according to claim 4, **characterised in that** the internal projection (15) is of a lesser height than the clear height within in the button tag.

7. An electronic button tag according to any one of claims 3 to 6, **characterised in that** the cylindrical wall (12) of the lower half-shell has a conical form with an upper shoulder (17) enabling the tip of the punch of a male panel tag to be locked in.

8. An electronic button tag according to any one of claims 3 to 7 **characterised in that** the sleeve is blind on the upper half-shell.

9. An electronic button tag according to any one of the claims 3 to 8, **characterised in that** the ends of the vertical walls (7/9) of the upper half-shell (2) are provided with flux cores (10).

10. An electronic button tag according to claim 1, **characterised in that** the processor (3") of the transponder (3) is folded down onto the coil (3'), the unit being fixed into position by the glue (16).

11. An electronic button tag according to claim 9, **characterised in that** the flux cores are welded by use of a laser.

12. An electronic button tag according to any one of claims 3 to 11, **characterised in that** the lower half-shell (1) is provided with a peripheral rim (13) which on assembly fits into the external shoulder (11) of the vertical wall (9) of the upper half-shell (2).

## Patentansprüche

1. Elektronische Ohrenmarke zur Markierung und Identifizierung von Vieh. Beinhaltet, eingeschlossen in eine Kapsel, einen Transponder, der programmierbar sein kann. Besagte Kapsel hat einen axialen Durchgang (4) für die Befestigung am Ohr des Tieres, **dadurch gekennzeichnet, dass**:
- die Kapsel besteht aus zwei Halbschalen, einer unteren (1) und einer oberen (2) Halbschale, deren Fügefläche senkrecht zum axialen Durchgang (4) für die Ohrbefestigung steht,
- der Transponder (3) wird, ohne zusammengedrückt zu werden, mit Klebstoff (16) zwischen den beiden Halbschalen fixiert, die beiden Halbschalen werden per Laserschweißung zusammengefügt,

2. Elektronische Ohrenmarke nach Anspruch 1, **dadurch gekennzeichnet, dass** die beiden Halbschalen (1-2) der Kapsel mit zusätzlichen inneren und äußeren Wänden ausgestattet sind, die gleichzeitig zur Verbesserung ihrer Montage, zur Versteifung der Kapsel und zur besseren Fixierung des internen Transponders beitragen.

3. Elektronische Ohrenmarke nach Anspruch 1 oder Anspruch 2, **dadurch gekennzeichnet, dass** auf die obere Halbschale (2) axial mittig ein zylindrischer Turm mit zentraler Bohrung aufgesetzt ist, dessen zylindrische Wand (5) nach außen über die ebene Gehäusewand (6) ragt und sich unterhalb der ebenen Gehäusewand in einer inneren ringförmigen Wand (7) fortsetzt, die ihrerseits auf der entsprechenden zylindrischen Wand (12) der unteren Halbschale (1) aufsitzt. Die ebene Gehäusewand der oberen Halbschale geht außen in eine vertikale Ringwand (9) über, die mit der unteren Halbschale (1) zusammengefügt wird.

4. Elektronische Ohrenmarke nach Anspruch 3, **dadurch gekennzeichnet, dass** die untere Halbschale (1) um ihre Mittelachse eine Ringwand (12) besitzt, die mit der Ringwand (5) des zylindrischen Turms der oberen Halbschale korrespondiert und den Durchgang der Ohrbefestigung darstellt,
- diese elektronische Ohrenmarke besitzt einen inneren Ringwall (15),
- diese elektronische Ohrenmarke hat einen hervorstehenden umlaufenden Ansatz (13) der mit der senkrechten Ringwand (9) der oberen Halbschale korrespondiert.

5. Elektronische Ohrenmarke nach Anspruch 4, **dadurch gekennzeichnet, dass** sich zwischen der inneren Ringwand (12) und dem umlaufenden Ansatz (13) ein interner Ringwall (15) zur Verstärkung befindet,

6. Elektronische Ohrenmarke nach Anspruch 4 oder Anspruch 5, **dadurch gekennzeichnet, dass** der innere Ringwall (15) eine kleinere Höhe hat als die lichte innere Höhe der Kapsel.

7. Elektronische Ohrenmarke nach einem der Ansprüche 3 bis 6, **dadurch gekennzeichnet, dass** die Ringwand (12) der unteren Halbschale eine konische Form aufweist und oben eine erhöhte Schulter (17) hat, die als Anschlag für die Spitze der zu befestigenden Ohrmarke dient.

8. Elektronische Ohrenmarke nach einem der Ansprüche 5 bis 7, **dadurch gekennzeichnet, dass** der zylindrische Turm auf der oberen Halbschale verschlossen ist.

9. Elektronische Ohrenmarke nach einem der Ansprüche 3 bis 8, **dadurch gekennzeichnet, dass** die vertikalen Ringwände (7/9) der oberen Halbschale (2) an ihrer Unterseite Schmelzfortsätze (10) aufweisen.

10. Elektronische Ohrenmarke nach Anspruch 1, **dadurch gekennzeichnet, dass** über der Spule (3') des Transponders (3) ein Prozessor (3") angeordnet ist, die gesamte Baugruppe ist mit Klebstoff (16) fixiert.

11. Elektronische Ohrenmarke nach Anspruch 9, **dadurch gekennzeichnet, dass** die Schmelzfortsätze zur Schweißung einer Laserbestrahlung unterzogen werden.

12. Elektronische Ohrenmarke nach einem der Ansprüche 3 bis 11, **dadurch gekennzeichnet, dass** die untere Halbschale (1) einen umlaufenden Ansatz (13) aufweist der bei der Montage zur entsprechenden Schulter (11) der vertikalen Ringwand (9) der oberen Halbschale (2) passt.
